# EUROPEAN PATENT APPLICATION

(11) **EP 4 730 023 A1**
(43) Date of publication of application: **22.04.2026**
(21) Application number: 25168195.3
(22) Date of filing: 03.04.2025
(51) Int. Cl.: G02F 1/01, G02B 6/12

(54) **STRUCTURE FOR POLARIZATION-INDEPENDENT COARSE WAVELENGTH DIVISION DEMULTIPLEXING**

(30) Priority: 18.10.2024 US 202418919576
(71) Applicant: GlobalFoundries U.S. Inc., Malta, NY 12020 (US)
(72) Inventor: Chatterjee, Avijit, 560045 Bangalore (IN); Dezfulian, Kevin K., Arlington 22207 (US); Minasamudram, Rupa Gopinath, 560045 Bangalore (IN); Dash, Aneesh, 560045 Bangalore (IN); Ruparelia, Vaibhav Anantrai, 560045 Bangalore (IN); Sorbara, Massimo, Freehold 07728 (US); Rakowski, Michal, Malta 12020 (US)
(74) Representative: Grünecker Patent- und Rechtsanwälte PartG mbB

(57) **Abstract**

Disclosed are embodiments of a structure for polarization-independent coarse wavelength division demultiplexing. The structure includes a polarization splitter-rotator (PSR), which receives a dual polarization mode multi-wavelength optical signal and outputs a single polarization mode multi-wavelength optical signal. The structure includes a wavelength division demultiplexer (WDD) and a thermo-optic phase-shifter (TOPS), which is coupled to the PSR and either coupled to the input section of the WDD or integrated into the input section of the WDD. The structure includes at least one photodetector and a thermal control system (TCS). The photodetector is coupled to an unused end of a waveguide in either the TOPS or WDD (depending on the embodiment). The TCS monitors output current from the photodetector, and based thereon, sets heating voltage(s) applied to heating element(s) in the TOPS, ensuring that single wavelength optical signals output from output sections of the WDD are at desired wavelengths and power levels.

## Description

### BACKGROUND

The present disclosure relates to embodiments of a structure for coarse wavelength division demultiplexing and, more particularly, to embodiments of an optoelectronic circuit structure for polarization-independent coarse wavelength division demultiplexing.

A coarse wavelength division demultiplexer (CWDD) is an optical device, which can receive a multi-wavelength optical signal and which can demultiplex that multi-wavelength optical signal into multiple single wavelength optical signals. However, if the received multi-wavelength optical signal is a dual polarization mode optical signal, two discrete CWDD blocks may be required to achieve the desired demultiplexing including, for example, a first CWDD block for receiving and demultiplexing the transverse electric (TE) mode portion of the optical signal and a second CWDD block for receiving and demultiplexing the transverse magnetic (TM) mode portion. A significant amount of photonic integrated circuit (PIC) area may be consumed when an application requires demultiplexing. Furthermore, signal distortions may occur due to non-identical CWDD blocks.

### SUMMARY

Disclosed herein are embodiments of an optoelectronic circuit structure. In some embodiments, the disclosed structure can include wavelength division demultiplexer (WDD) and a thermo-optic phase-shifter (TOPS) that is external to the WDD. Specifically, the TOPS can include a pair of waveguides including: a first waveguide with a first input end and a first output end and a second waveguide with a second input end and a second output end. The TOPS can also include at least one heating element adjacent to the waveguides. The structure can also include a photodetector coupled to the first output end of the first waveguide of the TOPS and a WDD coupled to the second output end of the second waveguide of the TOPS. The structure can further include a thermal control system (TCS), which is electrically connected to the photodetector and to the at least one heating element.

In other embodiments, the disclosed structure can include a WDD and a TOPS integrated into the WDD. Specifically, the structure can include a WDD. The WDD can include an input section with an integrated TOPS. That is, the input section can include a first input section waveguide, a second input section waveguide, a first heating element adjacent to the first input section waveguide, and a second heating element adjacent to the second input section waveguide. The structure can further include output sections. Each output section can be coupled to either the first input section waveguide or the second input section waveguide through at least one intermediate section. Additionally, each output section can include a first output section waveguide and a second output section waveguide. The structure can further include at least one photodetector (i.e., one or more photodetectors) and each photodetector can be coupled to the first output section waveguide of a corresponding one of the output sections. The structure can further include a TCS electrically connected to each photodetector and to the first and second heating elements.

It should be noted that all aspects, examples, and features of disclosed embodiments mentioned in the summary above can be combined in any technically possible way. That is, two or more aspects of any of the disclosed embodiments, including those described in this summary section, may be combined to form implementations not specifically described herein. The details of one or more implementations are set forth in the accompanying drawings and the description below. Other features, objects and advantages will be apparent from the description and drawings, and from the claims.

### BRIEF DESCRIPTION OF THE DRAWINGS

The present disclosure will be better understood from the following detailed description with reference to the drawings, which are not necessarily drawn to scale and in which:
FIG. 1 is a schematic diagram illustrating a disclosed embodiment of an optoelectronic circuit structure;
FIG. 2 is a schematic diagram illustrating an example of a thermal control system (TCS) that can be incorporated into the optoelectronic circuit structure of FIG. 1;
FIG. 3 is a flow diagram illustrating a method of operating the TCS of FIG. 1;
FIG. 4 is a schematic diagram illustrating another disclosed embodiment of an optoelectronic circuit structure;
FIG. 5 is a schematic diagram illustrating an example of a thermal control system (TCS) that can be incorporated into the optoelectronic circuit structure of FIG. 4; and
FIG. 6 is a flow diagram illustrating a method of operating the TCS of FIG. 5.

### DETAILED DESCRIPTION

As mentioned above, a coarse wavelength division demultiplexer (CWDD) is an optical device, which can receive a multi-wavelength optical signal and which can demultiplex that multi-wavelength optical signal into multiple single wavelength optical signals. However, if the received multi-wavelength optical signal is a dual polarization mode optical signal, two discrete CWDD blocks may be required to achieve the desired demultiplexing including, for example, a first CWDD block for receiving and demultiplexing the transverse electric (TE) mode portion of the optical signal and a second CWDD block for receiving and demultiplexing the transverse magnetic (TM) mode portion. A significant amount of photonic integrated circuit (PIC) area may be consumed when an application requires demultiplexing. Furthermore, signal distortions may occur due to non-identical CWDD blocks.

In view of the foregoing, disclosed herein are embodiments of an optoelectronic circuit structure for polarization-independent coarse wavelength division demultiplexing. In the disclosed embodiments, the structure can include a polarization splitter-rotator (PSR), which receives a dual polarization mode multi-wavelength optical signal and outputs a pair of single polarization mode (e.g., transverse electronic (TE) mode or a transverse magnetic (TM)) multi-wavelength optical signal to a combiner/splitter. The structure can further include a wavelength division demultiplexer (WDD), a thermo-optic phase-shifter (TOPS) (e.g., a Mach-Zehnder interferometer), and a feedback-based thermal control system for controlling heating voltage(s) applied to heating element(s) associated with the TOPS. Specifically, in some embodiments, the TOPS can be coupled between the combiner/splitter and the WDD. In these embodiments, the TOPS can include first and second waveguides with input ends coupled to the combiner/splitter and output ends coupled to a photodetector and to an input section of the WDD, respectively.

The TCS can control the heating voltage applied to heating element(s) adjacent to the first and second waveguides based on an output current from the photodetector in order to ensure that a desired spectral response is achieved (e.g., in order to ensure that different single wavelength optical signals output from the output ports of different output sections of the WDD are at the desired wavelengths and power levels). In other embodiments, the TOPS can be integrated into an input section of the WDD. For example, the WDD can include an input section and multiple output sections coupled to the input section via intermediate sections. The input section can include first and second input section waveguides coupled to the combiner/splitter. Each output section can include first and second output section waveguides. The second output section waveguide of each output section can have an end including an output port. The first output section waveguide of one or more of the output sections can have an end connected to a corresponding photodetector. The TCS can control first and second heating voltages applied to first and second heating elements adjacent to the first and second input section waveguides, respectively, based on output current(s) from the photodetector(s) in order to ensure that an optimal spectral response is achieved. In any case, in each of these embodiments, inclusion of the PSR, the TOPS (either external to or integrated with the WDD) and the feedback-based TCS effectively eliminates the need for two CWDD blocks for demultiplexing of a dual polarization mode multi-wavelength optical signal. Since only one WDD block is required, area consumption may be significantly reduced. Furthermore, since photodetector(s) used for feedback-based control of the heating voltage(s) is/are coupled to otherwise unused waveguide output ends without signal tapping, insertion loss due to such signal tapping is avoided.

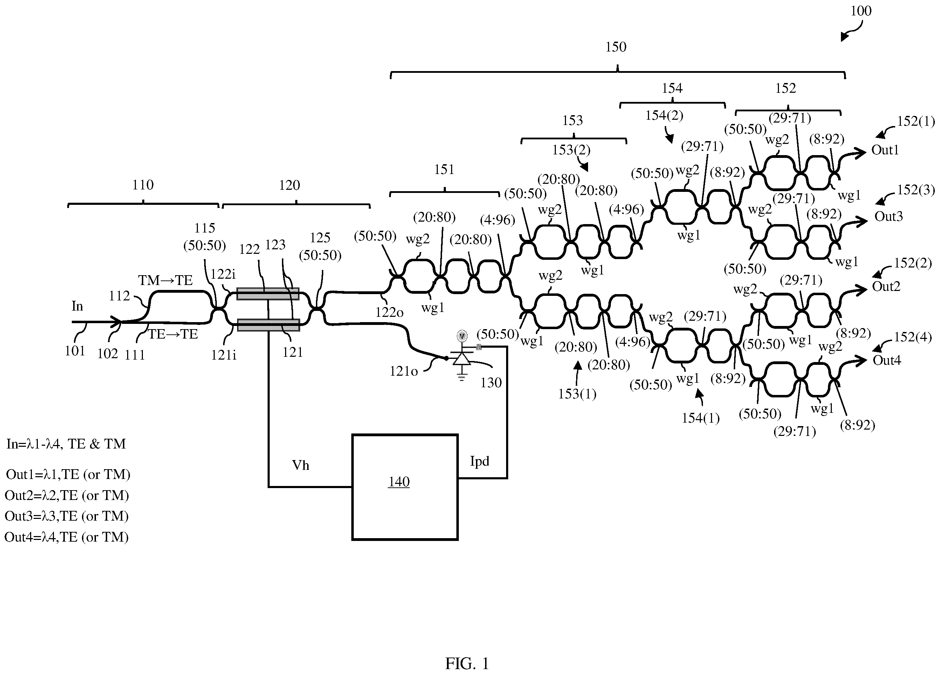

More particularly, FIG. 1 is a schematic diagram illustrating an embodiment of an optoelectronic circuit structure 100 (hereinafter referred to as structure 100). Structure 100 can include a combination of optical, optoelectronic, and electronic components. These components can include, but are not limited to, a polarization-splitter rotator (PSR) 110, a combiner/splitter 115, a wavelength division demultiplexer (WDD) 150, a thermo-optic phase-shifter (TOPS) 120 including heating element(s) 123, a photodetector 130, and a thermal control system (TCS) electrically connected to photodetector 130 and heating element(s) 123 of TOPS 120.

PSR 110 can include an input port 101 coupled to receive a dual polarization mode multi-wavelength optical signal (In). As mentioned above, a multi-wavelength optical signal is an optical signal that supports multiple wavelength channels (e.g., 4-18 wavelength channels), each separated by at least some nominal wavelength amount (e.g., 20 nanometers (nm) or some other suitable wavelength amounts). A dual polarization mode optical signal is an optical signal with random polarization (e.g., with both a transverse electric (TE) mode portion and a transverse magnetic (TM) portion). Those skilled in the art will recognize that in the TE mode, TE polarized light is characterized by an electric field that is perpendicular to the plane of incidence and a magnetic field perpendicular to the electric field. In the TM mode, TM polarized light is characterized by a magnetic field that is perpendicular to the plane of incidence and an electric field perpendicular to the magnetic field. For purposes of illustration, the dual polarization mode multi-wavelength optical signal (In) is shown in the figures and described below as including four different wavelength channels (λ1-λ4). However, it should be understood that, depending upon the configuration of WDD 150, as described below, it could include any number n of two or more different wavelength channels ( e.g., λ1-λ*n*, such as λ1-λ18).

PSR 110 can further include a polarization splitter 102 coupled between input port 101 and first and second PSR waveguides 111-112. Polarization splitter 102 can receive In from input port 101 and can be split (i.e., can be configured to split, adapted to split, etc.) split In by polarization modes so that a first polarization mode multi-wavelength optical signal is propagated to first PSR waveguide 111 and a second polarization mode multi-wavelength is propagated to second PSR waveguide 112. For purposes of illustration the first and second polarization modes are described below and illustrated in the figures as being TE and TM modes, respectively. However, it should be understood that the figures and discussion are not intended to be limiting. Alternatively, the first polarization mode could be the TM mode and the second polarization mode could be the TE mode. First and second PSR waveguides 111-112 can further be configured (e.g., due to relative placement, dimensions, etc.) so that the first polarization mode is maintained on the first PSR waveguide 111, while on the second PSR waveguide 112 the second polarization mode rotates to the first polarization mode. Thus, a pair of first polarization mode multi-wavelength optical signals (e.g., a pair of TE mode multi-wavelength optical signals) are propagated to the outputs ends of the first and second PSR waveguides 111-112. That is, PSR 110 effectively converts the dual polarization mode multi-wavelength optical signal (In) into two single polarization mode multi-wavelength optical signals having the same polarization mode and, particularly, the first polarization mode.

Combiner/splitter 115 can be coupled to the output ends of the first and second PSR waveguides 111-112 for receiving the pair of first polarization mode multi-wavelength optical signals. Combiner/splitter 115 can further process (e.g., combine and re-split with, for example, a 50:50 power distribution) the first polarization mode multi-wavelength optical signals.

PSRs and combiner/splitters are well known in the art and, thus, more specific details thereof have been omitted from this specification in order to allow the reader to focus on the salient aspects of the disclosed embodiments (e.g., see aspects related to use of TOPS 120, photodetector 130 and TCS 140 for achieving an optimal spectral response from WDD 150, as discussed in greater detail below).

TOPS 120 can be, for example, a Mach-Zehnder interferometer. Specifically, TOPS 120 can include first and second TOPS waveguides 121-122. First TOPS waveguide 121 can have a first input end 121i and a first output end 121o. Second TOPS waveguide 122 can have a second input end 122i and a second output end 122o. First and second input ends 121i and 122i can be coupled to combiner/splitter 115 for receiving a pair of first polarization mode multi-wavelength optical signals (e.g., a pair of TE mode multi-wavelength optical signals). First and second TOPS waveguides 121-122 can also include an internal combiner/splitter section 125 between the first and second input ends 121i and 122i and the first and second output ends 121o and 122o. As illustrated, TOPS 120 can further include two heating elements 123 adjacent to first and second TOPS waveguides 121-122, respectively, between combiner/splitter 115 and internal combiner/splitter section 125.

Alternatively, TOPS 120 could include a single heating element 123 adjacent to the first and second TOPS waveguides 121-122 between combiner/splitter 115 and internal combiner/splitter section 125. Internal combiner/splitter section 125 can combine and split (i.e., can be configured to, adapted to, etc. combine and split) optical signals propagating along first and second TOPS waveguides 121-122 between first and second input ends 121i and 122i and first and second output ends 121o and 122o. Ideally, within structure 100, the optical signal split by internal combiner/splitter section 125 will result in 0% or close thereto of optical signal power on first TOPS waveguide 121 between internal combiner/splitter section 125 and first output end 121o and 100% or close thereto of optical signal power on second TOPS waveguide 122 between internal combiner/splitter section 125 and second output end 122o. As discussed in greater detail below with regard to TCS 140, a heating voltage (Vh) applied by TCS 140 to heating element(s) 123 can be selectively adjusted to achieve the desired optical signal power distribution.

WDD 150 can be, for example, a conventional CWDD. That is, WDD 150 can include multiple sections including an input section 151, multiple output sections 152, and first intermediate sections 153 and, optionally, second intermediate sections 154, which support branching from the input section 151 to each of the output sections 152. These sections can be configured to demultiplex (e.g., through signal filtering, combining, splitting, etc.) a first polarization mode multi-wavelength signal output from TOPS 120 into first polarization mode optical signals with different wavelengths (which are output by output sections 152, respectively).

Generally, each section of WDD 150 can include a corresponding pair of parallel first and second waveguides (i.e., wg1 and wg2). Wg1 and wg2 can have adjacent input ends and adjacent output ends opposite the input ends. Wg1 and wg2 can also include multiple internal combiner/splitter sections having progressively decreasing power ratio distribution specifications. For example, as illustrated in FIG. 1 in some embodiments, wg1 and wg2 of input section 151 and of each first intermediate section 153 could have a 50:50 internal combiner/splitter section near the input ends, a 4:96 internal combiner/splitter section near the output ends, and two 20:80 internal combiner/splitter sections therebetween and wg1 and wg2 of each second intermediate section 154 and each output section 152 could have a 50:50 internal combiner/splitter section near the input ends, a 8:92 internal combiner/splitter section near the output ends, and a 29:71 internal combiner/splitter section therebetween. In any case, in the input section 151 of WDD 150, the input end of wg1 can be coupled to second output end 122o of second TOPS waveguide 122 of TOPS 120 and the input end of wg2 can be left unused. Furthermore, in each output section 152 of WDD 150, the output end of wg2 can include an output port (Out) that outputs a first polarization mode optical signal with a particular wavelength and the output end of wg1 can be left unused.

For purposes of illustration, the example embodiment shown in FIG. 1 includes four output sections 152(1)-152(4). The input section 151 branches to the fourth output section 152(4) and second output section 152(2) via first and second intermediate sections 153(1) and 154(1) and branches to the third output section 152(3) and the first output section 152(1) via first and second intermediate sections 153(2) and 154(2). In this case, a first polarization mode multi-wavelength optical signal received by input section 151 from combiner/splitter 115 can be filtered (i.e., demultiplexed) by the various sections into four first polarization mode optical signals with four different wavelengths λ1, λ2, λ3, and λ4. Output nodes Out1, Out2, Out3, and Out4 of output sections 152(1), 152(2), 152(3) and 152(4) can output λ1, λ2, λ3, and λ4, respectively.

WDDs are well known in the art and, thus, more specific details thereof have been omitted from this specification in order to allow the reader to focus on the salient aspects of the disclosed embodiments (e.g., see aspects related to use of TOPS 120, photodetector 130 and TCS 140 for achieving an optimal spectral response from WDD 150, as discussed in greater detail below).

Photodetector 130 (also referred to herein as a photosensor) can be coupled to first output end 121o of first TOPS waveguide 121. Photodetector 130 can be, for example, a photodiode or any other type of photodetector suitable for sensing the optical input power of the first polarization mode multi-wavelength optical signal propagated along first TOPS waveguide 121 to first output end 121o and for outputting an electrical signal (e.g., a photodiode output current (Ipd)) indicative of that optical input power. Those skilled in the art will recognize that Ipd from a photodetector may increase (e.g., linearly) with an increase in optical input power up to some saturation current level (Ipd_sat)).

TCS 140 can further be configured to apply a specific heating voltage (Vh) to heating element(s) 123 of TOPS 120 to achieve a desired photodetector output current (Ipd). By setting Vh at a particular voltage level to achieve a desired Ipd, TCS can selectively adjust the temperature of first and second TOPS waveguides 121-122 in order to achieve a desired spectral response (e.g., such that different single wavelength optical signals λ1, λ2, λ3, and λ4 are at the desired wavelengths and power levels).

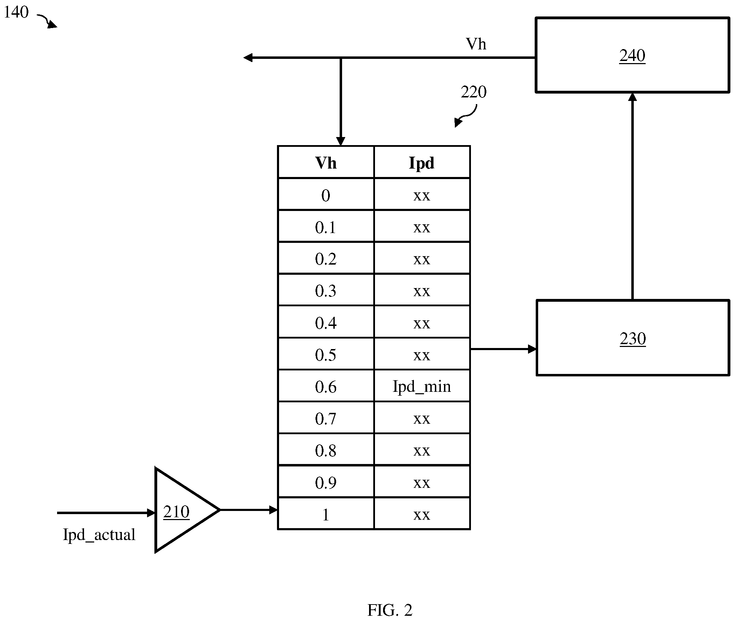

FIG. 2 is a schematic diagram illustrating an example of a TCS 140 that can be incorporated into structure 100. Referring to FIGs. 1-2 in combination, in this example, TCS 140 can include an amplifier 210 (e.g., a transimpedance amplifier (TIA)), which is connected to receive the actual output current (Ipd_actual) from photodetector 130. TCS 140 can further include voltage generator 240, which is electrically connected to heating element(s) 123. Voltage generator 240 can be configured to selectively output a Vh at any one of various different voltage levels from a minimum voltage level to a maximum voltage level to heating element(s) 123. For example, in some embodiments, Vh output by voltage generator 240 can range from 0.0V to 1.0V in 100mV steps. TCS 140 can further include a look-up table (LUT) 220 populated with a list of different Vhs and different Ipds associated with the different Vhs, respectively. TCS 140 can further include control logic 230, which is connected between LUT 220 and voltage generator 240. Control logic 230 can be configured to identify a specific Vh that corresponds to the lowest photodetector output current (Ipd_min) of all Ipds listed in LUT 220 and to further cause voltage generator 240 to apply that specific Vh to heating element(s) 123. For example, if, as indicated, a Vh of 0.6V corresponds to Ipd_min, then control logic 230 can cause voltage generator 240 to apply a Vh of 0.6V to heating element(s) 123.

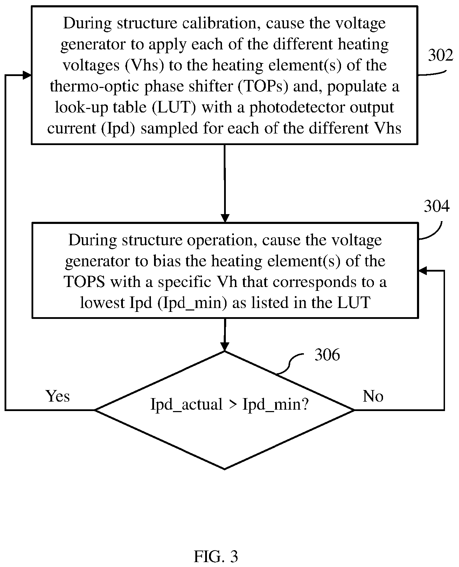

It should be noted that calibration processing can be performed in order to populate LUT 220 and further to repopulate LUT 220, as necessary. For example, as illustrated in the flow diagram of FIG. 3 in combination with FIGs. 1-2, structure calibration can include causing voltage generator 240 to apply each possible Vh to heating element(s) 123 of TOPS 120 (see process 302). Structure calibration at process 302 can also include, as each Vh is applied to heating element(s) 123 and the temperature of the first and second TOPS waveguides 121-122 is adjusted, populating LUT 220 with the Vh and a corresponding Ipd for that particular Vh (e.g., as sampled by amplifier 210). During normal structure operation, the specific Vh that corresponds to the lowest Ipd (i.e., Ipd_min) listed in LUT 220 can be employed to bias heating element(s) 123 (see process 304). Additionally, during normal structure operation, Ipd_actual can be monitored from photodetector 130 can be monitored through amplifier 210 (see process 306). As long as Ipd_min remains greater than or equal to Ipd_actual, the specific Vh associated with Ipd_min can be used to bias heating element(s) 123. However, if Ipd_actual rises above Ipd_min (i.e., if Ipd_actual > Ipd_min), calibration can be re-initiated to repopulate LUT 220. That is, process 302 can be repeated. In some embodiments, control logic 230 can cause process 302 to be performed automatically.

Referring again to FIG. 1, it should be noted that waveguides of the various components including, but not limited to, PSR 110, TOPS 120, and WDD 150 can include a combination of different waveguide core materials. These waveguide core materials can, for example, be selected from a group of waveguide core materials including, but not limited to, silicon, silicon nitride, any III-V semiconductor material, a metal oxide material, lithium niobate, and a ferroelectric material (e.g., barium titanate (BTO)). For example, in some embodiments, the waveguides of WDD 150 could include a first photonic waveguide core material only and the waveguides of combiner/splitter 115 can include a second photonic waveguide core material that is different from the first photonic waveguide material. Additionally, the waveguides of PSR 110 could transition from the first photonic waveguide core material at polarization splitter 102 to the second photonic waveguide core material adjacent to combiner/splitter 115. Furthermore, the waveguides of TOPS 120 can transition from the second photonic waveguide core material adjacent to combiner/splitter 115 to the first photonic waveguide core material adjacent to the photodetector 130 and WDD 150. In some embodiments, the first photonic waveguide core material can be silicon nitride and the second photonic waveguide core material can be silicon.

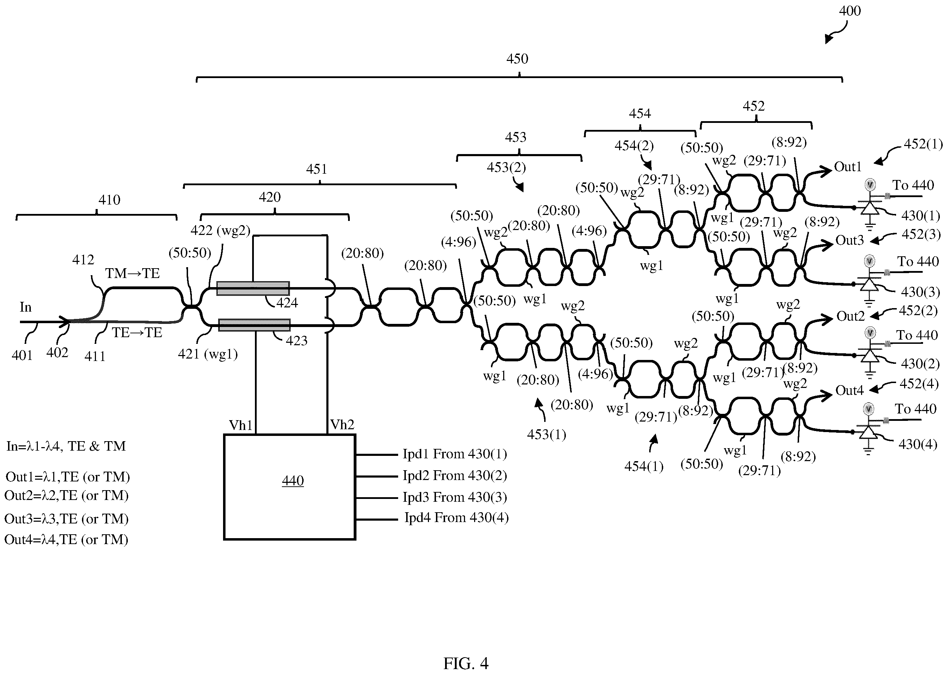

FIG. 4 is a schematic diagram illustrating another embodiment of an optoelectronic circuit structure 400 (hereinafter referred to as structure 400). Structure 400 can include a combination of optical, optoelectronic, and electronic components. These components can include, but are not limited to, a polarization-splitter rotator (PSR) 410, a wavelength division demultiplexer (WDD) 450 with an input section 451 including an integrated thermo-optic phase-shifter (TOPS) 420 with first and second heating element(s) 423-424, one or more photodetectors (e.g., see photodetectors 430(1)-430(4)), and a thermal control system (TCS) electrically connected to the photodetector(s) and to the first and second heating elements 423-424 of the TOPS 420.

PSR 410 can be configured essentially the same as PSR 110 of structure 100 of FIG. 1, as described in detail above. That is, PSR 410 can include an input port 401 coupled to receive a dual polarization mode multi-wavelength optical signal (In). PSR 410 can further include a polarization splitter 402 coupled between input port 401 and first and second PSR waveguides 411-412. Polarization splitter 402 can receive In from input port 401 and can be split (i.e., can be configured to split, adapted to split, etc.) In by polarization modes so that a first polarization mode multi-wavelength optical signal (e.g., a TE mode multi-wavelength optical signal) is propagated to first PSR waveguide 411 and a second polarization mode multi-wavelength (e.g., a TM mode multi-wavelength optical signal) is propagated to second PSR waveguide 412. First and second PSR waveguides 411-412 can further be configured (e.g., by relative placement, dimensions, etc.) so that the first polarization mode is maintain on the first PSR waveguide 111, whereas the second polarization mode rotates to the first polarization mode as the optical signal is propagated along the second PSR waveguide 412. Thus, a pair of first polarization mode multi-wavelength optical signals (e.g., a pair of TE mode multi-wavelength optical signals) are propagated to the output ends of the first and second PSR waveguides 411-412. That is, PSR 410 effectively converts the dual polarization mode multi-wavelength optical signal (In) into two single polarization mode multi-wavelength optical signals having the same polarization mode and, particularly, the first polarization mode.

WDD 450 can be similar to s conventional CWDD (e.g., similar to the WDD 150 of structure 100 of FIG. 1) except that it can include a thermo-optic phase shifter (TOPS) 420 integrated into the input section 451. That is, WDD 450 can include multiple sections including an input section 451, multiple output sections 452, and first intermediate sections 453 and, optionally, second intermediate sections 454, which support branching from the input section 451 to each of the output sections 452. These sections can be configured to demultiplex (e.g., through signal filtering, combining, splitting, etc.) first polarization mode multi-wavelength optical signals output by PSR 410 into first polarization mode optical signals with different wavelengths (which are output by output sections 452, respectively).

Generally, each section of WDD 450 can include a corresponding pair of parallel first and second waveguides (i.e., wg1 and wg2). The first and second waveguides wg1 and wg2 can have adjacent input ends and adjacent output ends opposite the input ends. The first and second waveguides wg1 and wg2 can also include multiple internal combiner/splitter sections having progressively decreasing power ratio distribution specifications. For example, as illustrated in FIG. 4 in some embodiments, the first and second waveguides wg1 and wg2 of input section 451 and of each first intermediate section 453 could have a 50:50 internal combiner/splitter section near the input ends, a 4:96 internal combiner/splitter section near the output ends, and two 20:80 internal combiner/splitter sections therebetween and the first and second waveguides wg1 and wg2 of each second intermediate section 454 and each output section 452 could have a 50:50 internal combiner/splitter section near the input ends, a 8:92 internal combiner/splitter section near the output ends, and a 29:71 internal combiner/splitter section therebetween. In any case, in the input section 451 of WDD 450, the 50:50 internal combiner/splitter section can be coupled to first PSR waveguide 411 and second PSR waveguide 412 of PSR 410 to receive the pair of first polarization mode multi-wavelength optical signals. Furthermore, in each output section 452 of WDD 450, the output end of the second waveguide wg2 can include an output port (Out) that outputs a first polarization mode optical signal with a particular wavelength and the output end of first waveguide wg1 can be either left unused or coupled to a photodetector (as discussed in greater detail below).

For purposes of illustration, the example embodiment shown in FIG. 4 includes four output sections 452(1)-452(4). The input section 451 branches to the fourth output section 452(4) and second output section 452(2) via first and second intermediate sections 453(1) and 454(1) and branches to the third output section 452(3) and the first output section 452(1) via first and second intermediate sections 453(2) and 454(2). In this case, first polarization mode multi-wavelength optical signals received by input section 451 from PSR 410 can be filtered (i.e., demultiplexed) by the various sections into four first polarization mode optical signals with four different wavelengths λ1, λ2, λ3, and λ4. Output nodes Out1, Out2, Out3, and Out4 of output sections 452(1), 452(2), 452(3) and 452(4) can output λ1, λ2, λ3, and λ4, respectively.

As mentioned above, in structure 400, input section 451 of WDD 450 can include an integrated TOPS 420. TOPS 420 can include the first and second waveguides wg1 and wg2 of input section 451 (i.e., a first input section waveguide 421 and a second input section waveguide 422). TOPS 420 can further include a first heating element 423 adjacent to first input section waveguide 421 and a second heating element 424 adjacent to second input section waveguide 422. It should be noted that first and second heating elements 423 and 424 can be adjacent to first and second input section waveguides 421 and 422, respectively, in the first portion of input section 451 (e.g., between the 50:50 internal combiner/spitter section and the first 20:80 internal combiner/splitter section).

At least one photodetector can be coupled to the output end of the first waveguide wg1 in at least one of the output sections 452(1)-452(4). For purposes of illustration, FIG. 4 shows a photodetector 430(1)-430(4) coupled to the output end of the first waveguide wg1 in each output section 452(1)-452(4). Each photodetector (also referred to herein as a photosensor) can be, for example, a photodiode or any other type of photodetector suitable for sensing an optical input power and for outputting an electrical signal (e.g., a photodiode output current (Ipd)) indicative of that optical input power. Those skilled in the art will recognize that Ipd from a photodetector may increase (e.g., linearly) with an increase in optical input power up to some saturation current level (Ipd_sat)). Thus, for example, photodetector 430(1) can output an Ipd indicative of the optical input power of λ1, photodetector 430(2) can output an Ipd indicative of the optical input power of λ2, and so on.

TCS 440 can be configured to apply a first heating voltage (Vh1) to first heating element 423 of TOPS 420 and a second heating voltage (Vh2) to second heating element 424 of TOPS 420 to achieve any of the following: (a) a desired output current from the photodetector (e.g., when structure 400 includes only one photodetector coupled to the output end of wg1 of only one output section); (b) a desired output current from a selected photodetector (e.g., when structure 400 includes multiple photodetectors, each coupled to the output end of the first waveguide wg1 of a corresponding output section, as illustrated); or (c) a desired sum or average of output currents from some or all of the photodetectors (e.g., when structure 400 includes multiple photodetectors, each coupled to the output end of the first waveguide wg1 of a corresponding output section, as illustrated). By setting Vh1 and Vh2 at particular voltage levels in this manner, TCS can selectively adjust the temperatures of the first input section waveguide 421 and the second input section waveguide 422 in order to achieve an optimal spectral response (e.g., in order to ensure that different single wavelength optical signals λ1, λ2, λ3, and λ4 are at the desired wavelengths and power levels).

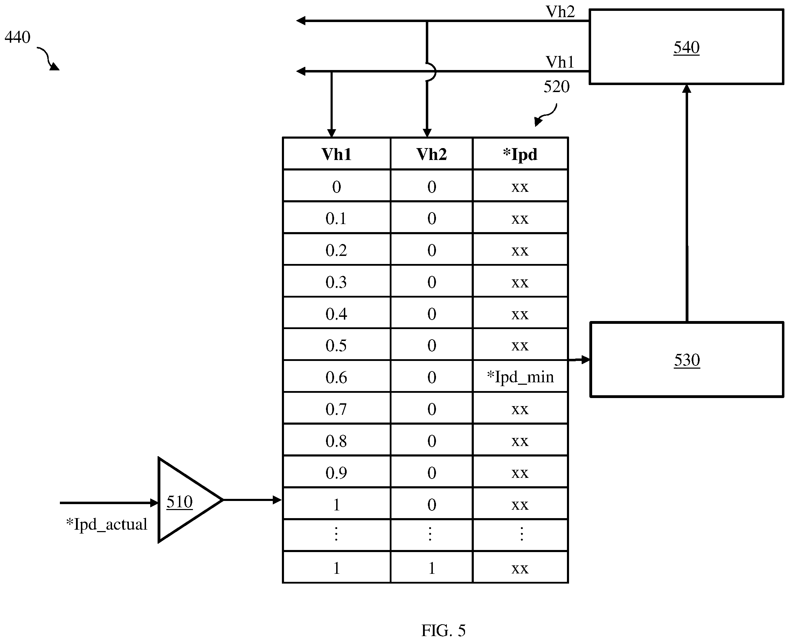

FIG. 5 is a schematic diagram illustrating an example of a TCS 440 that can be incorporated into structure 400. Referring to FIGs. 4-5 in combination, TCS 440 can include an amplifier 510 (e.g., a transimpedance amplifier (TIA)), which is connected to receive an actual output current (*Ipd_actual). It should be noted that *Ipd_actual could be received: (a) directly from a photodetector (e.g., when structure 400 includes only one photodetector coupled to the output end of wg1 of only one output section); (b) via a switch that allows Ipd from a selected one of multiple photodetectors to be received (e.g., when structure 400 includes multiple photodetectors, each coupled to the output end of the first waveguide wg1 of a corresponding output section, as illustrated); or (c) via a junction that sums all output currents from all photodetectors or via a current averaging circuit that averages all output currents from all photodetectors (e.g., when structure 400 includes multiple photodetectors, each coupled to the output end of the first waveguide wg1 of a corresponding output section, as illustrated).

TCS 440 can further include voltage generator 540, which is electrically connected to first and second heating elements 423 and 424. Voltage generator 540 can be configured to output Vh1 at any one of various different voltage levels from a minimum voltage level to a maximum voltage level to first heating element 423 and to also output Vh2 at any one of various different voltage levels from the minimum voltage level to the maximum voltage level to second heating element 424. Vh1 and Vh2 could be the same or different. In some embodiments, Vh1 and Vh2 output by voltage generator 540 can each range from 0.0V to 1.0V in 100mV steps. TCS 440 can further include a look-up table (LUT) 520 populated with a list of all possible combinations of Vh1 and Vh2 and different *Ipd values associated with each combination. As with *Ipd_actual, *Ipd listed in LUT 520 and associated with a particular Vh1-Vh2 combination can be: (a) an output current from a photodetector (e.g., when structure 400 includes only one photodetector coupled to the output end of wg1 of only one output section); (b) an output current from a selected photodetector (e.g., when structure 400 includes multiple photodetectors, each coupled to the output end of wg1 of a corresponding output section, as illustrated); or (c) a sum or average of output currents from multiple photodetectors (e.g., when structure 400 includes multiple photodetectors, each coupled to the output end of the first waveguide wg1 of a corresponding output section, as illustrated).

TCS 440 can further include control logic 530, which is connected between LUT 520 and voltage generator 540. Control logic 530 can be configured to identify a specific combination of Vh1 and Vh2 that corresponds to the lowest photodetector output current (*Ipd_min) of all *Ipds listed in LUT 520 and to further cause voltage generator 540 to apply that Vh1 and Vh2 of that specific combination to first and second heating elements 423 and 424, respectively. For example, if, as indicated, a Vh1 of 0.6V and Vh2 of 0.0V corresponds to *Ipd_min, then control logic 530 can cause voltage generator 540 to apply a Vh1 of 0.6V to first heating element 423 and a Vh2 of 0.0V to second heating element 424.

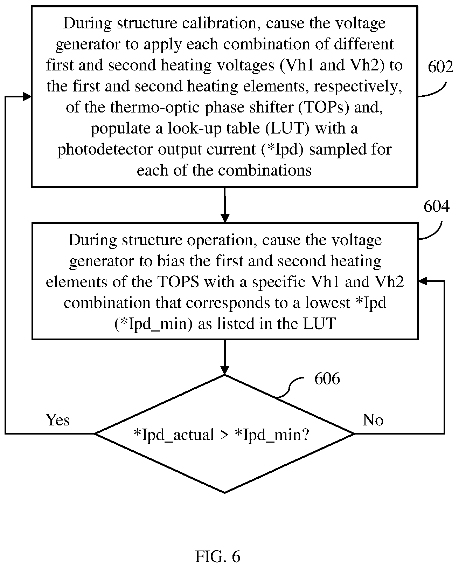

It should be noted that calibration processing can be performed in order to populate LUT 520 and further to repopulate LUT 520, as necessary or desired. For example, as illustrated in the flow diagram of FIG. 6 in combination with FIGs. 4-5, structure calibration can include causing voltage generator 540 to apply each possible combination of Vh1 and Vh2 to first heating element 423 and second heating element 424, respectively, of TOPS 120 (see process 602). Structure calibration at process 602 can also include, as each combination of Vh1 and Vh2 is applied to first heating element 423 and second heating element 424, respectively, and the temperatures of the first and second input section waveguides 421-422 are adjusted in response thereto, populating LUT 520 with Vh1-Vh2 combination and a corresponding *Ipd for that particular combination. During normal structure operation, the specific Vh1-Vh2 combination that corresponds to the lowest *Ipds (i.e., to *Ipd_min) listed in LUT 520 can be employed to bias first and second heating elements 423-424 (see process 604). Additionally, during normal structure operation, *Ipd_actual can be monitored (see process 606). As long as *Ipd_min remains greater than or equal to *Ipd_actual, the specific Vh1-Vh2 combination associated with *Ipd_min can be used to bias first and second heating elements 423-424. However, if *Ipd_actual rises above *Ipd_min (i.e., if *Ipd_actual > *Ipd_min), calibration can be re-initiated to repopulate LUT 520. That is, process 602 can be repeated. In some embodiments, control logic 530 can cause process 602 to be performed automatically.

Referring again to FIG. 4, it should be noted that waveguides of the various components including, but not limited to, PSR 410 and WDD 450 with integrated TOPS 420 in input section 451 can include a combination of different waveguide core materials. These waveguide core materials can, for example, be selected from a group of waveguide core materials including, but not limited to, silicon, silicon nitride, any III-V semiconductor material, a metal oxide material, lithium niobate, and a ferroelectric material (e.g., barium titanate (BTO)). For example, in some embodiments, the waveguides of all sections other than input section 451 can be made up entirely of a first photonic waveguide core material, whereas input section 451 can be made up of a combination of the first photonic waveguide core material and a second photonic waveguide core material. For example, within input section 451, 50:50 internal combiner/splitter section adjacent to PSR 410 and portions of first and second input section waveguides 421-422 extending from the 50:50 internal combiner/splitter section beyond first and second heating elements 423-424 can be made of the second photonic waveguide core material, whereas remaining portions of input section 451 can be made of the first photonic waveguide core material. Additionally, the waveguides of PSR 410 could transition from the first photonic waveguide core material at polarization splitter 402 to the second photonic waveguide core material adjacent to input section 451. In some embodiments, the first photonic waveguide core material can be silicon nitride and the second photonic waveguide core material can be silicon.

In any case, structure 100 of FIG. 1 and structure 400 of FIG. 4, inclusion of PSR 110, 410, TOPS 120, 420 (either external to or integrated with WDD 150, 450) and the feedback-based TCS 140, 440 effectively eliminates the need for two CWDD blocks for demultiplexing of a dual polarization mode multi-wavelength optical signal. Since only one WDD block is required, area consumption may be significantly reduced (e.g., by 30% or more and potentially by up to 50%). Furthermore, since any photodetectors 130, 430(1)-430(4) used for feedback-based control of the heating voltage applied to heating elements 123, 423-424 is/are coupled to otherwise unused waveguide output ends without signal tapping, insertion loss due to such signal tapping is avoided.

It should be understood that in the method and structures described above, a semiconductor material refers to a material whose conducting properties can be altered by doping with an impurity. Exemplary semiconductor materials include, for example, silicon-based semiconductor materials (e.g., silicon, silicon germanium, silicon germanium carbide, silicon carbide, etc.) and III-V compound semiconductors (i.e., compounds obtained by combining group III elements, such as aluminum (Al), gallium (Ga), or indium (In), with group V elements, such as nitrogen (N), phosphorous (P), arsenic (As) or antimony (Sb)) (e.g., GaN, InP, GaAs, or GaP). A pure semiconductor material and, more particularly, a semiconductor material that is not doped with an impurity for the purposes of increasing conductivity (i.e., an undoped semiconductor material) is referred to in the art as an intrinsic semiconductor. A semiconductor material that is doped with an impurity for the purposes of increasing conductivity (i.e., a doped semiconductor material) is referred to in the art as an extrinsic semiconductor and will be more conductive than an intrinsic semiconductor made of the same base material. That is, extrinsic silicon will be more conductive than intrinsic silicon; extrinsic silicon germanium will be more conductive than intrinsic silicon germanium; and so on. Furthermore, it should be understood that different impurities (i.e., different dopants) can be used to achieve different conductivity types (e.g., P-type conductivity and N-type conductivity) and that the dopants may vary depending upon the different semiconductor materials used. For example, a silicon-based semiconductor material (e.g., silicon, silicon germanium, etc.) is typically doped with a Group III dopant, such as boron (B) or indium (In), to achieve P-type conductivity, whereas a silicon-based semiconductor material is typically doped with a Group V dopant, such as arsenic (As), phosphorous (P) or antimony (Sb), to achieve N-type conductivity. A gallium nitride (GaN)-based semiconductor material is typically doped with magnesium (Mg) to achieve P-type conductivity and with silicon (Si) or oxygen to achieve N-type conductivity. Those skilled in the art will also recognize that different conductivity levels will depend upon the relative concentration levels of the dopant(s) in a given semiconductor region.

It should be understood that the terminology used herein is for the purpose of describing the disclosed structures and methods and is not intended to be limiting. For example, as used herein, the singular forms "a," "an," and "the" are intended to include the plural forms as well, unless the context clearly indicates otherwise. Additionally, as used herein, the terms "comprises," "comprising," "includes," and/or "including" specify the presence of stated features, integers, steps, operations, elements, and/or components, but do not preclude the presence or addition of one or more other features, integers, steps, operations, elements, components, and/or groups thereof. Furthermore, as used herein, terms such as "right," "left," "vertical," "horizontal," "top," "bottom," "upper," "lower," "under," "below," "underlying," "over," "overlying," "parallel," "perpendicular," etc., are intended to describe relative locations as they are oriented and illustrated in the drawings (unless otherwise indicated) and terms such as "touching," "in direct contact," "abutting," "directly adjacent to," "immediately adjacent to," etc., are intended to indicate that at least one element physically contacts another element (without other elements separating the described elements). The term "laterally" is used herein to describe the relative locations of elements and, more particularly, to indicate that an element is positioned to the side of another element as opposed to above or below the other element, as those elements are oriented and illustrated in the drawings. For example, an element that is positioned laterally adjacent to another element will be beside the other element, an element that is positioned laterally immediately adjacent to another element will be directly beside the other element, and an element that laterally surrounds another element will be adjacent to and border the outer sidewalls of the other element. The corresponding structures, materials, acts, and equivalents of all means or step plus function elements in the claims below are intended to include any structure, material, or act for performing the function in combination with other claimed elements as specifically claimed.

The method as described above is used in the fabrication of integrated circuit chips. The resulting integrated circuit chips can be distributed by the fabricator in raw wafer form (that is, as a single wafer that has multiple unpackaged chips), as a bare die, or in a packaged form. In the latter case the chip is mounted in a single chip package (such as a plastic carrier, with leads that are affixed to a motherboard or other higher level carrier) or in a multichip package (such as a ceramic carrier that has either or both surface interconnections or buried interconnections). In any case the chip is then integrated with other chips, discrete circuit elements, and/or other signal processing devices as part of either (a) an intermediate product, such as a motherboard, or (b) an end product. The end product can be any product that includes integrated circuit chips, ranging from toys and other low-end applications to advanced computer products having a display, a keyboard or other input device, and a central processor.

The descriptions of the various disclosed embodiments have been presented for purposes of illustration but are not intended to be exhaustive or limiting. Many modifications and variations will be apparent to those of ordinary skill in the art without departing from the scope and spirit of the disclosed embodiments. The terminology used herein was chosen to best explain the principles of the embodiments, the practical application or technical improvement over technologies found in the marketplace, or to enable others of ordinary skill in the art to understand the embodiments disclosed herein.

In summary, embodiments of a structure for polarization-independent coarse wavelength division demultiplexing are disclosed herein in various embodiments, e.g., as set for the below. The structure includes a polarization splitter-rotator (PSR), which receives a dual polarization mode multi-wavelength optical signal and outputs a single polarization mode multi-wavelength optical signal. The structure includes a wavelength division demultiplexer (WDD) and a thermo-optic phase-shifter (TOPS), which is coupled to the PSR and either coupled to the input section of the WDD or integrated into the input section of the WDD. The structure includes at least one photodetector and a thermal control system (TCS). The photodetector is coupled to an unused end of a waveguide in either the TOPS or WDD (depending on the embodiment). The TCS monitors output current from the photodetector, and based thereon, sets heating voltage(s) applied to heating element(s) in the TOPS, ensuring that single wavelength optical signals output from output sections of the WDD are at desired wavelengths and power levels.

The following embodiments are explicitly disclosed.

### Embodiment 1:

A structure comprising:
a thermo-optic phase-shifter including: waveguides including: a first waveguide having a first input end and a first output end; and a second waveguide having a second input end and a second output end; and
at least one heating element adjacent to the waveguides;
   a photodetector coupled to the first output end;
   a wavelength division demultiplexer coupled to the second output end; and
   a thermal control system electrically connected to the photodetector and to the at least one heating element.

### Embodiment 2:

The structure of embodiment 1, further comprising:
a polarization splitter-rotator converting a dual polarization mode multi-wavelength optical signal into two single polarization mode multi-wavelength optical signals having a same polarization mode; and
a combiner/splitter receiving the two single polarization mode multi-wavelength optical signals from the polarization splitter-rotator and further processing and providing the two single polarization mode multi-wavelength optical signals having the same polarization mode to the first input end of the first waveguide and the second input end of the second waveguide, respectively.

### Embodiment 3:

The structure of embodiment 2, wherein the two single polarization mode multi-wavelength optical signals having the same polarization mode are one of transverse electric mode multi-wavelength optical signals and transverse magnetic mode multi-wavelength optical signals.

### Embodiment 4:

The structure of embodiment 2 or 3, wherein the wavelength division demultiplexer includes a first photonic waveguide core material, the combiner/splitter includes a second photonic waveguide core material, and the polarization splitter-rotator and the thermo-optic phase-shifter each include a combination of the first photonic waveguide core material and a second photonic waveguide core.

### Embodiment 5:

The structure of one of embodiments 1 to 4, wherein the thermal control system sets
a heating voltage applied to the at least one heating element.

### Embodiment 6:

The structure of one of embodiments 1 to 5, wherein the thermal control system includes:
a voltage generator electrically connected to the at least one heating element;
a look-up table populated with a list of different heating voltages and different photodetector output currents associated with the different heating voltages, respectively; and
control logic connected between the look-up table and the voltage generator, wherein the control logic identifies a specific heating voltage corresponding to a lowest photodetector output current of the different photodetector output currents listed in the look-up table and causes the voltage generator to apply the specific heating
voltage to the at least one heating element.

### Embodiment 7:

The structure of embodiment 6, wherein the thermal control system further monitors an actual photodetector output current received from the photodetector and repopulates the look-up table when the actual photodetector output current is greater than the lowest photodetector output current.

### Embodiment 8:

The structure of one of embodiments 1 to 7, wherein the thermo-optic phase-shifter includes a Mach-Zehnder interferometer.

### Embodiment 9:

The structure of one of embodiments 1 to 8, wherein the wavelength division demultiplexer demultiplexes a single polarization mode multi-wavelength optical signal received at an input section and includes output sections that output different single polarization mode single wavelength optical signals, respectively.

### Embodiment 10:

The structure of embodiment 9, wherein the first photonic waveguide core material is silicon nitride and the second photonic waveguide core material is silicon.

### Embodiment 11:

A structure comprising:
a wavelength division demultiplexer including:
an input section with an integrated thermo-optic phase-shifter, wherein the input section includes:
a first input section waveguide;
a second input section waveguide;
a first heating element adjacent to the first input section waveguide; and a second heating element adjacent to the second input section waveguide; and
output sections, wherein each output section is coupled to one of the first input section waveguide and the second input section waveguide through at least one intermediate section and includes:
   a first output section waveguide; and
   a second output section waveguide;
at least one photodetector, wherein each photodetector is coupled to the first output section waveguide of a corresponding one of the output sections; and
a thermal control system electrically connected to each photodetector and to the first and second heating elements.

### Embodiment 12:

The structure of embodiment 11, further comprising a polarization splitter-rotator converting a dual polarization mode multi-wavelength optical signal into two single polarization mode multi-wavelength optical signals having a same polarization mode, wherein the polarization splitter-rotator is coupled to the input section of the wavelength division demultiplexer.

### Embodiment 13:

The structure of embodiment 12, wherein the two single polarization mode multi-wavelength optical signals having the same polarization mode are one of transverse electric mode multi-wavelength optical signals and transverse magnetic mode multi-wavelength optical signals.

### Embodiment 14:

The structure of embodiment 12 or 13, wherein each intermediate section and each output section of the wavelength division demultiplexer include a first photonic waveguide core material only and wherein the polarization splitter-rotator and the input section of the wavelength division demultiplexer include a combination of the first photonic waveguide core material and a second photonic waveguide core material different from the first photonic waveguide core material.

### Embodiment 15:

The structure of one of embodiments 11 to 14, wherein the thermal control system sets a first heating voltage applied to the first heating element and a second heating voltage applied to the second heating element.

### Embodiment 16:

The structure of one of embodiments 11 to 15, wherein the thermal control system includes:
a voltage generator electrically connected to the first heating element and to the second heating element;
a look-up table populated with a list of different combinations of first and second heating voltages and different photodetector output currents associated with the different combinations, respectively; and
control logic connected between the look-up table and the voltage generator, wherein the control logic identifies a specific combination of a first heating voltage and a second heating voltage corresponding to a lowest photodetector output current of the photodetector output currents listed in the look-up table and causes the voltage generator to apply the first heating voltage and the second heating voltage of the specific combination to the first heating element and the second heating element, respectively.

### Embodiment 17:

The structure of embodiment 16, wherein the thermal control system further monitors an actual photodetector output current received from the photodetector and repopulates the look-up table when the actual photodetector output current is greater than the lowest photodetector output current.

### Embodiment 18:

The structure of one of embodiments 11 to 17, wherein the integrated thermo-optic phase-shifter includes a Mach-Zehnder interferometer.

### Embodiment 19:

The structure of one of embodiments 11 to 18, wherein the second output section waveguide of each output section outputs different single polarization mode single wavelength optical signal.

### Embodiment 20:

The structure of embodiment 19, wherein the first photonic waveguide core material is silicon nitride and the second photonic waveguide core material is silicon.

## Claims

1. A structure comprising:
a thermo-optic phase-shifter including:
waveguides including: a first waveguide having a first input end and a first output end; and a second waveguide having a second input end and a second output end; and
at least one heating element adjacent to the waveguides;
a photodetector coupled to the first output end;
a wavelength division demultiplexer coupled to the second output end; and
a thermal control system electrically connected to the photodetector and to the at least one heating element.

2. The structure of claim 1, further comprising:
a polarization splitter-rotator converting a dual polarization mode multi-wavelength optical signal into two single polarization mode multi-wavelength optical signals having a same polarization mode; and
a combiner/splitter receiving the two single polarization mode multi-wavelength optical signals from the polarization splitter-rotator and further processing and providing the two single polarization mode multi-wavelength optical signals having the same polarization mode to the first input end of the first waveguide and the second input end of the second waveguide, respectively.

3. The structure of claim 2, wherein the two single polarization mode multi-wavelength optical signals having the same polarization mode are one of transverse electric mode multi-wavelength optical signals and transverse magnetic mode multi-wavelength optical signals.

4. The structure of claim 2 or 3, wherein the wavelength division demultiplexer includes a first photonic waveguide core material, the combiner/splitter includes a second photonic waveguide core material, and the polarization splitter-rotator and the thermo-optic phase-shifter each include a combination of the first photonic waveguide core material and a second photonic waveguide core,
wherein the first photonic waveguide core material preferably is silicon nitride and the second photonic waveguide core material preferably is silicon.

5. The structure of one of claims 1 to 4, wherein the thermal control system sets a heating voltage applied to the at least one heating element, and/or wherein the wavelength division demultiplexer demultiplexes a single polarization mode multi-wavelength optical signal received at an input section and includes output sections that output different single polarization mode single wavelength optical signals, respectively.

6. The structure of one of claims 1 to 5, wherein the thermal control system includes:
a voltage generator electrically connected to the at least one heating element;
a look-up table populated with a list of different heating voltages and different photodetector output currents associated with the different heating voltages,
respectively; and
control logic connected between the look-up table and the voltage generator, wherein
the control logic identifies a specific heating voltage corresponding to a lowest photodetector output current of the different photodetector output currents listed in the look-up table and causes the voltage generator to apply the specific heating voltage to the at least one heating element.

7. The structure of claim 6, wherein the thermal control system further monitors an actual photodetector output current received from the photodetector and repopulates the look-up table when the actual photodetector output current is greater than the lowest photodetector output current.

8. A structure comprising:
a wavelength division demultiplexer including:
an input section with an integrated thermo-optic phase-shifter, wherein the input section includes:
a first input section waveguide;
a second input section waveguide;
a first heating element adjacent to the first input section waveguide; and
a second heating element adjacent to the second input section waveguide; and
output sections, wherein each output section is coupled to one of the first input section waveguide and the second input section waveguide through at least one intermediate section and includes:
a first output section waveguide; and
a second output section waveguide;
at least one photodetector, wherein each photodetector is coupled to the first output section waveguide of a corresponding one of the output sections; and
a thermal control system electrically connected to each photodetector and to the first and second heating elements.

9. The structure of claim 8, further comprising a polarization splitter-rotator converting a dual polarization mode multi-wavelength optical signal into two single polarization mode multi-wavelength optical signals having a same polarization mode, wherein the polarization splitter-rotator is coupled to the input section of the wavelength division demultiplexer.

10. The structure of claim 9, wherein the two single polarization mode multi-wavelength optical signals having the same polarization mode are one of transverse electric mode multi-wavelength optical signals and transverse magnetic mode multi-wavelength optical signals.

11. The structure of claim 9 or 10, wherein each intermediate section and each output section of the wavelength division demultiplexer include a first photonic waveguide core material only and wherein the polarization splitter-rotator and the input section of the wavelength division demultiplexer include a combination of the first photonic waveguide core material and a second photonic waveguide core material different from the first photonic waveguide core material,
wherein the first photonic waveguide core material preferably is silicon nitride and the second photonic waveguide core material preferably is silicon.

12. The structure of one of claims 8 to 11, wherein the thermal control system sets a first heating voltage applied to the first heating element and a second heating voltage applied to the second heating element, and/or
wherein the second output section waveguide of each output section outputs different single polarization mode single wavelength optical signal.

13. The structure of one of claims 8 to 12, wherein the thermal control system includes:
a voltage generator electrically connected to the first heating element and to the second heating element;
a look-up table populated with a list of different combinations of first and second heating voltages and different photodetector output currents associated with the different combinations, respectively; and
control logic connected between the look-up table and the voltage generator, wherein the control logic identifies a specific combination of a first heating voltage and a second heating voltage corresponding to a lowest photodetector output current of the photodetector output currents listed in the look-up table and causes the voltage generator to apply the first heating voltage and the second heating voltage of the specific combination to the first heating element and the second heating element, respectively.

14. The structure of claim 13, wherein the thermal control system further monitors an actual photodetector output current received from the photodetector and repopulates the look-up table when the actual photodetector output current is greater than the lowest photodetector output current.

15. The structure of one of claims 1 to 14, wherein the integrated thermo-optic phase-shifter includes a Mach-Zehnder interferometer.
